# EUROPEAN PATENT SPECIFICATION

(11) **EP 3 194 226 B1**
(45) Date of publication and mention of the grant of the patent: **05.05.2021**
(21) Application number: 15767301.3
(22) Date of filing: 12.08.2015
(51) Int. Cl.: B60T 11/20, B60T 11/16, B60T 11/22

(54) **A PUMP CONTROL DEVICE FOR A VEHICLE**
PUMPENSTEUERUNGSVORRICHTUNG FÜR EIN FAHRZEUG
DISPOSITIF DE COMMANDE DE POMPE DESTINÉ À UN VÉHICULE

(30) Priority: 29.08.2014 IT BG20140037
(43) Date of publication of application: 26.07.2017
(73) Proprietor: Freni Brembo S.p.A., 24035 Curno (Bergamo) (IT)
(72) Inventor: LAVEZZI, Roberto, I-24035 Curno (Bergamo) (IT); REOLON, Mauro, I-24035 Curno (Bergamo) (IT)
(74) Representative: Leihkauf, Steffen Falk
(86) International application number: PCT/IB2015/056145
(87) International publication number: WO 2016/030789

(56) References cited:
- EP-A1- 0 185 165
- WO-A1-02/070315
- DE-A1- 4 240 518
- DE-A1-102006 048 184
- DE-U1- 20 111 971
- US-A- 4 162 616
- US-A1- 2005 247 193
- US-A1- 2007 215 417
- US-A1- 2011 048 873
- US-A1- 2011 192 687

## Description

The present invention relates to a pump control devices for vehicles, in particular to a pump device that can be actuated using a clutch or brake control lever of a motorcycle.

In motorcycles, brake and clutch are manually actuated by a pump control device operated by a user actuation member, from which control device a hydraulic hose extends up to the system to be controlled, for example a brake or clutch hydraulically actuated. For example, the pump control device for a front brake or clutch can be mounted on the handlebar of the motorcycle and actuated by a hand lever, while the pump control device for a rear brake can be mounted on the frame of the motorcycle and actuated with the foot by a pedal.

The pump control devices of the prior art include a pump body with means for connecting the device to a utility, in particular a handlebar or frame of a motorcycle, a hydraulic actuator formed in the pump body and in fluid connection with the system to be controlled, as well as a user actuation member associated with the pump body and connected with a piston of the hydraulic actuator so that a rotation of the lever with respect to the pump body results in an operation of the hydraulic actuator that affects the system to be controlled.

In the cheaper known embodiments, the pump body is made by die-casting of an aluminum alloy and subsequent machining with chip removal. While the machining with chip removal is expensive, to date it is indispensable to obtain the dimensional accuracy of the hydraulic cylinder, necessary for the proper functioning of the hydraulic actuator and not obtainable by die-casting.

A further problem of pump control devices for vehicles is corrosion: exposure to climatic conditions (rain, humidity, pollution) can cause degradation and malfunctions due to corrosion. Moreover, the material for the hydraulic piston cannot be chosen freely as the difference of metal materials between piston and cylinder can cause galvanic corrosion in the actuator. US2005/247193A and DE102006048184A1 describe pump control devices that form a closest state of the art for the present invention.

The object of the present invention therefore is to provide a pump control device for vehicles and a method of manufacture thereof, having such features as to overcome at least some of the drawbacks of the prior art.

A particular object of the present invention is to provide a pump control device for vehicles having such structural features as to reduce the manufacturing costs.

A further particular object of the invention is to provide a method of manufacture of a pump control device for vehicles, having such features as to reduce or eliminate the machining with chip removal.

Further particular objects relate to an improvement of corrosion resistance of the pump control device.

These and other objects are achieved by a pump control device according to claims 1 and 8 and by a method of manufacturing a pump control device according to claim 7.

The dependent claims describe advantageous embodiment variations.

According to one aspect of the invention, the pump body is hot formed in metal material, e.g. die-cast, forged, cast iron, and forms an actuator cavity inside which a moulded polymeric lining is arranged which forms a cylinder of the hydraulic actuator.

The moulding of the cylinder in polymeric material, in particular a techno-polymer, allows high dimensional accuracy and, therefore, obviates to the machining with chip removal. The lower mechanical resistance of the polymeric material is compensated by the fact that the polymer lining is received and supported by the surrounding metal material of the pump body.

Moreover, the polymeric coating does not have problems of corrosion and allows for a targeted and appropriate choice of the metal or non-metal material for the piston without any risk of galvanic corrosion.

To better understand the invention and appreciate the benefits thereof, some exemplary non-limiting embodiments thereof are described hereafter with reference to the accompanying drawings, in which:
figure 1 is a sectional view of a pump control device for a vehicle according to an embodiment of the invention;
figure 2 is a sectional view of a pump control device for a vehicle according to a further embodiment of the invention;

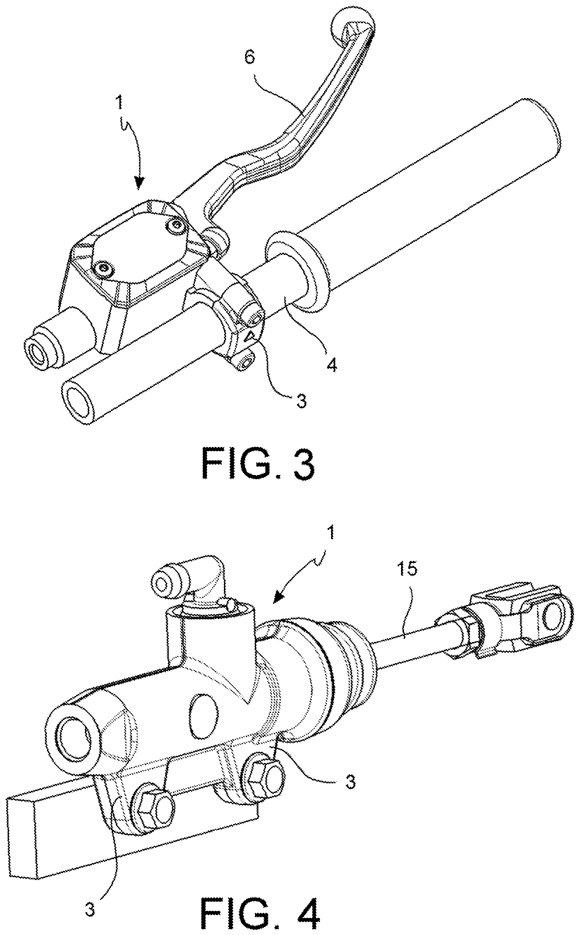

figure 3 is a perspective view of a pump control device mounted on a handlebar;
figure 4 is a perspective view of a pump control device mounted on a frame for foot actuation by a pedal.

With reference to the figures, a pump control device 1 comprises a pump body 2 with means 3 for connecting device 1 to the vehicle, in particular to a handlebar 4 of a motorcycle, a hydraulic actuator 5 with a piston 7 slidably received in a cylinder 10 formed in the pump body 2 and in fluid connection with a system to be controlled (brake, clutch, etc.), as well as a lever 6 hinged with respect to the pump body 2 and connected with a piston 7 of the hydraulic actuator 5 in such a way that a rotation of lever 6 with respect to the pump body 2 causes an operation of the hydraulic actuator 5 affecting the system to be controlled, such as a clutch or a braking system of a motorcycle.

According to one aspect of the invention, the pump body 2 is die-cast in metal material, preferably an aluminum alloy, and forms an actuator cavity 8 inside which a moulded polymeric lining 9 is arranged which forms the cylinder 10. Alternatively to the aluminum die-casting, the pump body 2 can be generically hot formed in metal material, e.g. die-cast, forged, or cast iron. In yet a further embodiment, the pump body 2 can be moulded in plastic material.

The moulding of cylinder 10 in polymeric material, in particular a techno-polymer, allows high dimensional accuracy and, therefore, obviates to the machining with chip removal. The actuator cavity 8 in metal material supports and stiffens the polymeric coating 9, preventing undesired deformation of cylinder 10 despite the lower mechanical resistance of the lining 9 of polymeric material. Moreover, the polymeric lining 9 does not have problems of corrosion and allows a free choice of the metal material for piston 7 without having to take galvanic corrosion issues into account.

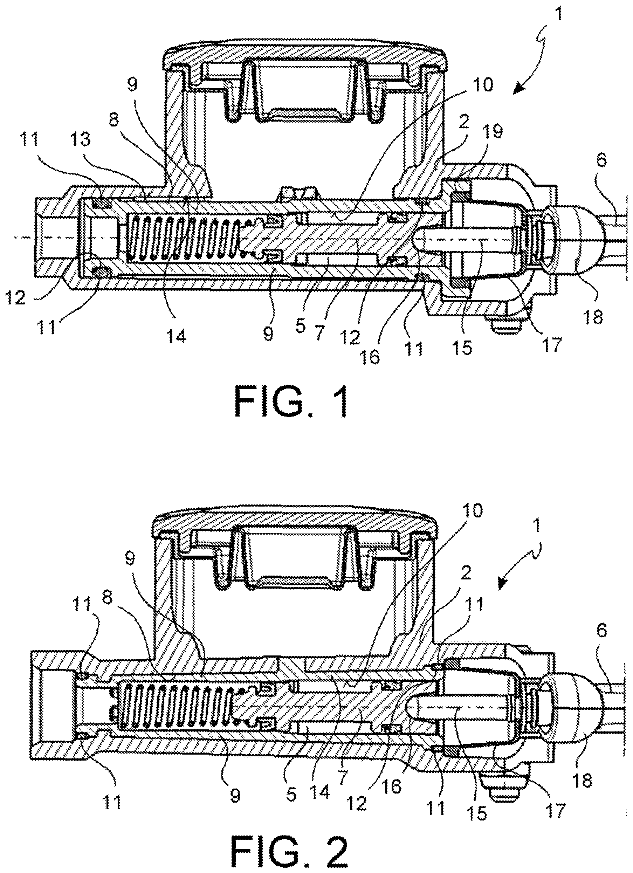

According to an embodiment (Figure 1), the polymeric lining 9 comprises a polymeric insert that is injection-moulded separately from the pump body 2 and subsequently inserted in the actuator cavity 8. To this end, there are provided only two annular gaskets 11 (O-rings) accommodated in respective circumferential grooves 12 formed in an outer surface 13 of the polymeric insert and which, with polymeric insert placed in the actuator cavity 8, are in a pressing contact engagement with an inner surface 14 of the actuator cavity 8.

This allows compensating for the unavoidable dimensional tolerances of the actuator cavity 8 made through die-casting and, at the same time, ensuring the water tightness of the hydraulic cylinder 10.

The two annular gaskets 11 (O-rings) are arranged in the proximity of two opposite ends of the hydraulic cylinder 10.

The separate manufacture and the reversible assembly of the polymeric insert allows replacing cylinder 10 in case of damage or malfunction.

According to a further embodiment (Figure 2), the polymeric lining 9 is co-moulded to the inner surface 14 of the actuator cavity 8.

In this way, it is possible to minimize the costs of manufacturing and assembly while also ensuring high dimensional accuracy and good water tightness of the hydraulic cylinder 10. If the interface between the polymeric lining 9 and the pump body 2 is unable to ensure the required water tightness, the two annular gaskets 11 described above may also be provided here or, alternatively, vulcanized sealing areas in replacement of and in the same locations as the annular gaskets 11 (Figure 2) .

Seats 12 for receiving gaskets 11 are formed in the polymeric lining 9 directly during the moulding or co-moulding of the polymeric lining 9 and/or by localized machining limited to the gasket seats 12 only.

In one embodiment, lever 6 is connected to piston 7 by a transmission bar 15 extending from a connecting seat 16 of piston 7 across an elastomeric protective lid 17 (dust lid) up to a connecting portion 18 of lever 6. Advantageously, the elastomeric protective lid 17 is connected in a circumferential lid seat 19 formed in the polymeric lining 9. Alternatively, the elastomeric protective lid 17 can be connected in a lid seat formed in the pump body 2 or between the pump body 2 and the polymeric lining 9.

In this way, all the connecting regions of the hydraulic cylinder 10 requiring a waterproof seal are made by the moulded polymeric lining with suitable dimensional accuracy and without any need for expensive precision machining.

The die-cast pump body 2 is preferably made of aluminum alloy, the polymeric lining is preferably of technopolymer reinforced with fibre glass (e.g. Solvay "Ixef"®, Dupont "Zytel"®, EMS "Grivory"®) and piston 7 is also of a technopolymer (e.g. Chevron Phillips "Ryton"®). The pump body 2 may be moulded in polymer, such as BASF "Ultramid"®.

The pump body 2 may be made of aluminum to obtain:
- a mechanical resistance to operational stresses and shocks that cannot be provided by the more delicate material of lining 9, or
- a finer aesthetic effect.

In the absence of these requirements, the pump body 2 could be for example in a synthetic material cheaper than that used for the polymeric lining 9, taking into account that the material of the polymeric lining 9 should ensure accuracy and dimensional stability, wear resistance (sliding on piston), while the material of the pump body 2 must ensure suitable mechanical resistance to shocks, resistance to ultraviolet rays and to atmospheric agents in general and, possibly, particular outer surface features for aesthetic purposes (color, painting, etc.).

The invention therefore allows also using two different materials, each selected specifically for the requirements of two different regions of device 1.

A man skilled in the art may make several changes and adjustments to the pump control device 1 according to the present invention in order to meet specific and incidental needs, all falling within the scope of protection of the invention as defined by the following claims.

## Claims

1. A pump control device (1) for a vehicle, comprising:
- a pump body (2) hot formed in metal material and with means (3) for connecting the device (1) to the vehicle,
- a hydraulic actuator (5) arranged in the pump body (2) and having a cylinder (10) connectable with a system of the vehicle to be controlled, and a piston (7) slidably received in the cylinder (10),
- a control member (6) connected with the piston (7) to actuate the hydraulic actuator (5),
wherein the cylinder (10) is made of a moulded polymeric lining (9), arranged in an actuator cavity (8) of the pump body (2),
**characterized in that** the polymeric lining (9) comprises a polymeric insert that is injection-moulded separately from the pump body (2) and subsequently inserted in the actuator cavity (8), wherein there are provided only two annular gaskets (11) accommodated in respectively two circumferential grooves (12) formed in an outer surface (13) of the polymeric insert and in a pressing contact engagement with an inner surface (14) of the actuator cavity (8), said only two annular gaskets (11) being arranged in the proximity of two opposite ends of the hydraulic cylinder (10).

2. The device (1) according to claim 1, wherein the cylinder (10) can be disassembled from the pump body (2) and replaced.

3. The device (1) according to claim 1, wherein the polymeric lining (9) is moulded together with an inner surface (14) of the actuator cavity (8).

4. The device (1) according to one of the preceding claims, wherein the control member (6) is connected to the piston (7) by a transmission bar (15) extending across an elastomeric protective lid (17), said elastomeric protective lid (17) being connected in a circumferential lid seat (19) obtained in the polymeric lining (9).

5. The device (1) according to one of the preceding claims, wherein the control member (6) comprises a lever (6) that is hinged with respect to the pump body (2) and connected with the piston (7) so that a rotation of the lever (6) with respect to the pump body (2) leads to an actuation of the hydraulic actuator (5).

6. The device (1) according to one of the preceding claims, wherein the pump body (2) is die-cast in aluminum alloy.

7. A method for manufacturing a pump control device (1) according to claim 1, comprising:
- manufacturing the pump body (2) in a metal material by hot forming, and obtaining an actuator cavity (8) in the pump body during the hot forming step;
- manufacturing the cylinder (10) in a polymeric material (9) by injection moulding and without machining,
- connecting the cylinder (10) in the actuator cavity (8) of the pump body (2).

8. A pump control device (1) for a vehicle, comprising:
- a pump body (2) moulded in a synthetic material and having means (3) for the connection of the device (1) to the vehicle,
- a hydraulic actuator (5) arranged in the pump body (2) and having a cylinder (10) connectable with a system of the vehicle to be controlled, and a piston (7) slidably received in the cylinder (10),
- a control member (6) connected with the piston (7) to actuate the hydraulic actuator (5),
wherein the cylinder (10) is made of a polymeric lining (9) arranged in an actuator cavity (8) of the pump body (2), **and** the polymeric lining (9) is moulded of a material that is different from the synthetic material of the pump body (2),
**characterized in that** the polymeric lining (9) comprises a polymeric insert that is injection-moulded separately from the pump body (2) and subsequently inserted in the actuator cavity (8), wherein there are provided only two annular gaskets (11) accommodated in respectively two circumferential grooves (12) formed in an outer surface (13) of the polymeric insert and in a pressing contact engagement with an inner surface (14) of the actuator cavity (8), said only two annular gaskets (11) being arranged in the proximity of two opposite ends of the hydraulic cylinder (10).

## Patentansprüche

1. Pumpen-Steuervorrichtung (1) für ein Fahrzeug, umfassend:
- einen Pumpenkörper (2), welcher aus Metallmaterial heißgeformt ist, und mit Mitteln (3) zum Verbinden der Vorrichtung (1) mit dem Fahrzeug,
- einen hydraulischen Aktuator (5), welcher in dem Pumpenkörper (2) angeordnet ist und einen Zylinder (10), welcher mit einem zu steuernden System des Fahrzeugs verbindbar ist, sowie einen Kolben (7) aufweist, welcher in dem Zylinder (10) gleitbar aufgenommen ist,
- ein Steuerelement (6), welches mit dem Kolben (7) verbunden ist, um den hydraulischen Aktuator (5) zu betätigen,
wobei der Zylinder (10) aus einer gegossenen Polymer-Verkleidung (9) hergestellt ist, angeordnet in einem Aktuator-Hohlraum (8) des Pumpenkörpers (2),
**dadurch gekennzeichnet, dass** die Polymer-Verkleidung (9) einen Polymer-Einsatz umfasst, welcher separat von dem Pumpenkörper (2) spritzgegossen und anschließend in den Aktuator-Hohlraum (8) eingesetzt ist, wobei lediglich zwei ringförmige Dichtungen (11) vorgesehen sind, welche in entsprechenden zwei Umfangsnuten (12) aufgenommen sind, welche in einer äußeren Fläche (13) des Polymer-Einsatzes gebildet sind und in einem Presskontakt-Eingriff mit einer inneren Fläche (14) des Aktuator-Hohlraums (8) stehen, wobei die lediglich zwei ringförmigen Dichtungen (11) in der Nähe von zwei gegenüberliegenden Enden des Hydraulikzylinders (10) angeordnet sind.

2. Vorrichtung (1) nach Anspruch 1, wobei der Zylinder (10) von dem Pumpenkörper (2) abmontiert und ersetzt werden kann.

3. Vorrichtung (1) nach Anspruch 1, wobei die Polymer-Verkleidung (9) mit einer inneren Fläche (14) des Aktuator-Hohlraums (8) zusammen gegossen ist.

4. Vorrichtung (1) nach einem der vorhergehenden Ansprüche, wobei das Steuerelement (6) mit dem Kolben (7) durch eine Übertragungsstange (15) verbunden ist, welche sich über eine Elastomer-Schutzkappe (17) erstreckt, wobei die Elastomer-Schutzkappe (17) in einem umfänglichen Kappensitz (19) verbunden ist, welcher in der Polymer-Verkleidung (9) erhalten ist.

5. Vorrichtung (1) nach einem der vorhergehenden Ansprüche, wobei das Steuerelement (6) einen Hebel (6) umfasst, welcher bezüglich des Pumpenkörpers (2) angelenkt und mit dem Kolben (7) verbunden ist, so dass eine Rotation des Hebels (6) bezüglich des Pumpenkörpers (2) zu einer Betätigung des hydraulischen Aktuators (5) führt.

6. Vorrichtung (1) nach einem der vorhergehenden Ansprüche, wobei der Pumpenkörper (2) aus Aluminium-Legierung druckgegossen ist.

7. Verfahren zum Herstellen einer Pumpen-Steuervorrichtung (1) nach Anspruch 1, umfassend:
- Herstellen des Pumpenkörpers (2) aus einem Metallmaterial durch Heißformen und Erhalten eines Aktuator-Hohlraums (8) in dem Pumpenkörper während des Heißform-Schritts;
- Herstellen des Zylinders (10) aus einem Polymer-Material (9) durch Spritzgießen und ohne Bearbeiten,
- Verbinden des Zylinders (10) in dem Aktuator-Hohlraum (8) des Pumpenkörpers (2).

8. Pumpen-Steuervorrichtung (1) für ein Fahrzeug, umfassend:
- einen Pumpenkörper (2), welcher aus einem synthetischen Material gegossen ist, und Mittel (3) zum Verbinden der Vorrichtung (1) mit dem Fahrzeug aufweist,
- einen hydraulischen Aktuator (5), welcher in dem Pumpenkörper (2) angeordnet ist und einen Zylinder (10), welcher mit einem zu steuernden System des Fahrzeugs verbindbar ist, sowie einen Kolben (7) aufweist, welcher in dem Zylinder (10) gleitbar aufgenommen ist,
- ein Steuerelement (6), welches mit dem Kolben (7) verbunden ist, um den hydraulischen Aktuator (5) zu betätigen,
wobei der Zylinder (10) aus einer gegossenen Polymer-Verkleidung (9) hergestellt ist, angeordnet in einem Aktuator-Hohlraum (8) des Pumpenkörpers (2), und die Polymer-Verkleidung (9) aus einem Material gegossen ist, welches verschieden von dem synthetischen Material des Pumpenkörpers (2) ist, **dadurch gekennzeichnet, dass** die Polymer-Verkleidung (9) einen Polymer-Einsatz umfasst, welcher separat von dem Pumpenkörper (2) spritzgegossen und anschließend in den Aktuator-Hohlraum (8) eingesetzt ist, wobei lediglich zwei ringförmige Dichtungen (11) vorgesehen sind, welche in entsprechenden zwei Umfangsnuten (12) aufgenommen sind, welche in einer äußeren Fläche (13) des Polymer-Einsatzes gebildet sind und in einem Presskontakt-Eingriff mit einer inneren Fläche (14) des Aktuator-Hohlraums (8) stehen, wobei die lediglich zwei ringförmigen Dichtungen (11) in der Nähe von zwei gegenüberliegenden Enden des Hydraulikzylinders (10) angeordnet sind.

## Revendications

1. Dispositif de commande de pompe (1) destiné à un véhicule, comprenant
- un corps de pompe (2) formé à chaud en un matériau métallique et avec des moyens (3) pour connecter le dispositif (1) au véhicule,
- un actionneur hydraulique (5) agencé dans le corps de pompe (2) et comprenant un cylindre (10) pouvant être connecté à un système du véhicule à commander, et un piston (7) logé de manière coulissante dans le cylindre (10),
- un élément de commande (6) relié au piston (7) pour actionner l'actionneur hydraulique (5),
le cylindre (10) étant fait d'une paroi polymère (9) moulée agencée dans une cavité d'actionneur (8) du corps de pompe (2),
**caractérisé en ce que** la paroi polymère (9) comprend un insert polymère qui est formé par injection séparément du corps de pompe (2) et ensuite inséré dans la cavité d'actionneur (8), seulement deux joints annulaires (11) étant prévus, logés dans deux rainures circonférentielles (12) respectives formées dans une surface extérieure (13) de l'insert polymère et avec une liaison par contact de pression avec une surface intérieure (14) de la cavité d'actionneur (8), lesdits seulement deux joints annulaires (11) étant agencés à proximité des deux extrémités opposées du cylindre hydraulique (10).

2. Dispositif (1) selon la revendication 1, **caractérisé en ce que** le cylindre (10) peut être démonté du corps de pompe (2) et remplacé.

3. Dispositif (1) selon la revendication 1, **caractérisé en ce que** la paroi polymère (9) est moulée ensemble avec une surface intérieure (14) de la cavité d'actionneur (8).

4. Dispositif (1) selon l'une des revendications précédentes, **caractérisé en ce que** l'élément de commande (6) est relié au piston (7) par une barre de transmission (15) s'étendant à travers un couvercle de protection en élastomère (17), le couvercle de protection en élastomère (17) étant relié dans un siège de couvercle circonférentiel (19) obtenu dans la paroi polymère (9).

5. Dispositif (1) selon l'une des revendications précédentes, **caractérisé en ce que** l'élément de commande (6) comprend un levier (6) qui est articulé par rapport au corps de pompe (2) et relié au piston (7), si bien qu'une rotation du levier (6) par rapport au corps de pompe (2) mène à un actionnement de l'actionneur hydraulique (5).

6. Dispositif (1) selon l'une des revendications précédentes, **caractérisé en ce que** le corps de pompe (2) est moulé sous pression en un alliage d'aluminium.

7. Procédé pour fabriquer un dispositif de commande de pompe (1) selon la revendication 1, comprenant
- fabriquer le corps de pompe (2) par formage à chaud en un matériau métallique et obtenir une cavité d'actionneur (8) dans le corps de pompe pendant l'étape de formage à chaud,
- fabriquer le cylindre (10) en un matériau polymère (9) par moulage par injection et sans usinage,
- relier le cylindre (10) dans la cavité d'actionneur (8) du corps de pompe (2).

8. Dispositif de commande de pompe (1) destiné à un véhicule, comprenant
- un corps de pompe (2) moulé en un matériau synthétique et avec des moyens (3) pour connecter le dispositif (1) au véhicule,
- un actionneur hydraulique (5) agencé dans le corps de pompe (2) et comprenant un cylindre (10) pouvant être connecté à un système du véhicule à commander, et un piston (7) logé de manière coulissante dans le cylindre (10),
- un élément de commande (6) relié au piston (7) pour actionner l'actionneur hydraulique (5),
le cylindre (10) étant fait d'une paroi polymère (9) agencée dans une cavité d'actionneur (8) du corps de pompe (2),
et la paroi polymère (9) étant moulée en un matériau qui est différent du matériau synthétique du corps de pompe (2),
**caractérisé en ce que** la paroi polymère (9) comprend un insert polymère qui est formé par injection séparément du corps de pompe (2) et ensuite inséré dans la cavité d'actionneur (8), seulement deux joints annulaires (11) étant prévus, logés dans deux rainures circonférentielles (12) respectives formées dans une surface extérieure (13) de l'insert polymère et avec une liaison par contact de pression avec une surface intérieure (14) de la cavité d'actionneur (8), lesdits seulement deux joints annulaires (11) étant agencés à proximité des deux extrémités opposées du cylindre hydraulique (10).
